# EUROPEAN PATENT APPLICATION

(11) **EP 3 454 275 A1**
(43) Date of publication of application: **13.03.2019**
(21) Application number: 17190372.7
(22) Date of filing: 11.09.2017
(51) Int. Cl.: G06Q 20/04, G06Q 20/10, G06Q 20/32, G06Q 10/10

(54) **PROCESSING INFORMATION FOR REIMBURSEMENTS**

(71) Applicant: innogy SE, 45128 Essen (DE)
(72) Inventor: Keller, Thomas, 47228 Duisburg (DE); Menck, Kai-Peter, 58313 Herdecke (DE); Satkunananthan, Nadija, 44329 Dortmund (DE); Stulla, Tom, 56727 Mayen (DE)
(74) Representative: Cohausz & Florack

(57) **Abstract**

A method is disclosed comprising: obtaining a set of information comprising one or more information, wherein each information of the set of information is indicative of a record, wherein the set of information is associated with a task performed by a user; determining a classification information indicative of a record type of each information of the set of information based on the obtained set of information; determining a plausibility information for each information of the one or more information comprised by the set of information based on the one or more information comprised by the set of information and the determined classification information, wherein the plausibility information is indicative of a verification of at least one of the one or more information comprised by the set of information complying with at least one pre-defined requirement; and initiating a physical reimbursement based at least partially on the obtained set of information and on the determined plausibility information. It is further disclosed an according apparatus, computer program and system.

## Description

### FIELD

The following disclosure relates to the field of processing information, and more particularly relates to systems, apparatuses, and methods for processing one or more information for a reimbursement.

### BACKGROUND

Nowadays different approaches exist in particular to process expenses of an employee. For instance, the employee may have delivered expenses in advance for a company in conjunction with e.g. business activities. To name but one example, such expenses may have occurred by a business travel performed by the employee.

In order to reimburse the expenses that the employee has delivered in advance, high human resources are demanded. Firstly, the employee has to input necessary information of his business travel, e.g. start- and end-date, location, or the like, and the employee has to provide prove of his expenses delivered in advance. Therefore, the employee has to e.g. scan receipts and provide them to e.g. an HR (Human Resource) department of the company. The HR department has to check the expenses of the employee and give approval of the correctness of the expenses of the employee. After the approval has been given, the reimbursement can be started.

It is obvious that a plurality of such expenses of a plurality of employees of the company delivered in advance require extensive resources in order to be processed.

### SUMMARY

As an alternative the input of necessary information by the employee may for instance be performed by scanning receipts and performing an OCR (Optical Character Recognition) so that the employee does not need to enter information comprised by the receipts (e.g. date, time, location, amount) on his own. Still, the checking of the expenses has to be performed by human resources.

It is thus, inter alia, an object of the invention to achieve a solution of efficiently handling the process of checking information associated with a task, which has been performed by the employee for his employer.

According to a first exemplary aspect of the present invention, a method is disclosed, the method comprising:
- obtaining a set of information comprising one or more information, wherein each information of the set of information is indicative of a record, wherein the set of information is associated with a task performed by a user;
- determining a classification information indicative of a record type of each information of the set of information based on the obtained set of information;
- determining a plausibility information for each information of the one or more information comprised by the set of information based on the one or more information comprised by the set of information and the determined classification information, wherein the plausibility information is indicative of a verification of at least one of the one or more information comprised by the set of information complying with at least one pre-defined requirement; and
- initiating a physical reimbursement based at least partially on the obtained set of information and on the determined plausibility information.

This method may for instance be performed and/or controlled by a first apparatus, for instance a server. Alternatively, this method may be performed and/or controlled by more than one apparatus, for instance a server cloud comprising at least two servers. For instance, the method may be performed and/or controlled by using at least one processor of the server.

According to a second exemplary aspect of the present invention, a method is disclosed, the method comprising:
- gathering one or more information, wherein each information of the one or more information is indicative of a record, wherein the one or more information are associated with a task performed by a user;
- generating a set of information based at least partially on the gathered one or more information; and
- providing the generated set of information.

This method may for instance be performed and/or controlled by a second apparatus, for instance an electronic device. The electronic device may for instance be a mobile terminal. For instance, the method may be performed and/or controlled by using at least one processor of the electronic device.

According to a further exemplary aspect of the invention, a computer program is disclosed, the computer program when executed by a processor causing an apparatus, for instance a server, to perform and/or control the actions of the method according to the first and/or second exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform and/or control or comprising respective means for performing and/or controlling the method according to the first and/or second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first and/or second exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system is disclosed, comprising:
- at least one first apparatus, and
- at least one second apparatus,
   which are configured to perform and/or control the method according to the first and/or second exemplary aspect of the present invention.

For instance, the at least one first apparatus may for instance perform and/or control the method according to the first exemplary aspect of the present invention, and the at least one second apparatus may for instance perform and/or control the method according to the second exemplary aspect of the present invention.

In the following, exemplary features and exemplary embodiments of all aspects of the present invention will be described in further detail.

The set of information may for instance be received from or stem from an electronic device, e.g. the second apparatus, or from another entity. The set of information may alternatively stem from an entity that is different from the second apparatus, e.g. a server or computer that may for instance relay the set of information.

The user may for instance desire a physical reimbursement, e.g. of an amount of money which may have been delivered in advance in conjunction with the task performed by the user. For instance, corresponding to a task (e.g. business travel), the user has delivered in advance one or more expenses (e.g. for a hotel, rental car, food, or the like to name but a few non-limiting examples).

The user may for instance be an employee of a company, or a person assigned by the company.

The task performed by the user may for instance be an activity related to field of work the user performs, e.g. a business travel, a delivery of goods and/or services, or the like to name but a few non-limiting examples.

The record may for instance be a receipt or other record with respect to the task. The record may for instance at least comprise e.g. an amount, a good and/or service, and an identifier identifying the location from which the record type stems (e.g. from a restaurant, hotel, rental car company, gas station or the like to name but a few non-limiting examples). Further details are described below.

The record type may for instance represent a category. The record itself may for instance be associated with such a category. For instance, the record type may represent one of the following categories i) to vi), e.g. i) a restaurant; ii) a hotel, iii) a rental car; iv) a ticket; v) a delivery note; vi) or other category. Thus, the record type may for instance be derivable from each information comprised by the set of information.

The set of information is further associated with a task performed by a user. Additionally, each information comprised by the set of information may for instance be associated with the task performed by the user.

The set of information may for instance be analyzed to determine the classification information. Based on the classification information, it may for instance be known with which of the categories i) to vi) an information represented by a record according to an information comprised by the set of information is associated. For instance, a set of information may be obtained, and may comprise an information represented by a record of a hotel. That information may for instance be represented by a picture taken e.g. by one or more sensors, wherein the picture is taken from the record. To determine the classification information of said information comprised by the set of information, the picture may for instance be analyzed, e.g. by analyzing means, to determine the classification information, e.g. of the category ii). For instance, the category ii) may be determined based on an artificial neural network, which may use the picture (information) as an input to output the classification information.

The determining of the classification information may for instance be performed for each information comprised by the set of information, e.g. in case the set of information comprises more than one information. Thus, for each information comprised by the set of information one classification information may for instance be determined, e.g. by subsequentially performing the determining for all of the information comprised by the obtained set of information.

The plausibility information is indicative of a verification of one of the one or more information comprised by the set of information complying with at least one pre-defined or determined according to pre-defined rules requirement. Such a requirement may for instance be a deviation of e.g. a location according to the record with respect to the task, and/or a deviation of an amount according to the record with respect to a pre-defined threshold value, to name but a few non-limiting examples. The deviation may for instance result in a determined (e.g. calculated) likelihood value, which the plausibility information may for instance represent.

The plausibility information may for instance be determined based on an (e.g. further) artificial neural network. Such an artificial neural network complies with machine learning enabling to use of previous (e.g. training) cases to enhance the performance of such an artificial neural network.

The determining of the plausibility information may for instance be performed for each information comprised by the set of information, in case the set of information comprises more than one information. Thus, for each information comprised by the set of information one plausibility information may for instance be determined, e.g. by subsequentially performing the determining of one plausibility information for all of the information comprised by the obtained set of information.

The physical reimbursement is initiated, e.g. by triggering a bank transfer. After the bank transfer is complete, the user may for instance have the amount, which the user has delivered in advance with respect to the task (e.g. business travel), added to his bank account. For instance, prior to initiating physical reimbursement, the amount to be transferred may for instance be determined. The amount may for instance be determined based on the set of information, since the set of information comprises e.g. the amount delivered by the user in advance with respect to the record represented by each information comprised by the set of information. For instance, each information comprised by the set of information may comprise at least one amount, which has been delivered by the user in advance. The determined amount may for instance be further comprised by the plausibility information. Such a determining may for instance be performed by the (further) artificial neural network at least partially automatically. In this way, the user does not need to enter such information (e.g. the amount he delivered in advance) by himself.

According to an example embodiment of all aspects of the present invention, each information of the one or more information comprised by the set of information is indicative of one or more of the following types i) to iv) of information:
i) travel route information;
ii) record information;
iii) one or more times and/or dates associated with each information of the set of information; and
iv) amount information.

The travel route information may for instance comprise a start position and a target position (e.g. in coordinates such as for instance latitude/longitude coordinates, or by means of postal addresses). Additionally, the travel route information may for instance comprise one or more interim targets (e.g. as well in latitude/longitude coordinates, or by means of a postal address). The travel route information may for instance comprise further parameters e.g. relevant for a travelled route, such as for instance an area which was travelled to within the task performed by the user.

The record information may for instance be one or more information representing a record, which may have been digitalized, e.g. by one or more sensors. The record may for instance be a receipt or other record of the user associated with the task performed by the user.

The amount information may for instance comprise an amount of money spent, and/or a number of goods (e.g. items) or services purchased to determine the amount of money delivered by the user in advance with respect to the task performed by the user, or the like to name but a few non-limiting examples.

According to an example embodiment of all aspects of the present invention, each of the types i) to iv) of information comprises at least a part of information gathered by one or more sensors.

The one or more sensors may for instance be comprised by or connectable to an electronic device of the user. Further details to the one or more sensors and/or the electronic device of the user are described below, in particular with respect to the method according to the second exemplary aspect of the present invention.

According to an example embodiment of the first exemplary aspect of the present invention, the initiating of the physical reimbursement comprises determining a reimbursement information indicative of an amount to be physically reimbursed, and transferring the amount represented by the reimbursement information to an account associated with the user.

The account associated with the user may for instance be determined prior to transferring the amount to the account associated with the user, e.g. based on an identifier of the user, e.g. comprised by the set of information. Additionally or alternatively, the account of the user may for instance be represented by an account information, which may further be comprised by the set of information. Additionally or alternatively, prior to transferring the amount represented by the reimbursement information, the account of the user may for instance be requested. For instance, the user may receive such a request, e.g. on his electronic device, and may then enter his account information into the electronic device. After the entering of the account information, the account information may for instance be transmitted. Thus, the account information may for instance be obtained prior to initiating (e.g. and transferring) the amount represented by the reimbursement information.

According to an example embodiment of the first exemplary aspect of the present invention, the determining of the plausibility information comprises at least one comparison of each information comprised by the set of information with one or more pre-defined or determined according to pre-defined rules requirements.

The requirements may for instance define one or more requirements, which each information comprised by the set of information has to fulfill in order to be considered to be plausible according to the determined plausibility information. In an exemplary embodiment according to the first exemplary aspect of the present invention, the rules may be related or equal the above mentioned requirements, or may be used to determine the requirements. For instance, the rules may define certain framework conditions, while the requirements determined based at least partially on the rules may then define e.g. certain limits and/or thresholds, to name but a few non-limiting examples.

Thus, the requirements may for instance be indicative of one or more threshold values, e.g. defining in which frame e.g. expenses of a task (e.g. business travel) are allowed, or if e.g. a location of a record (e.g. restaurant receipt) matches with locations (e.g. allowed according to the requirements) according to the travel route information of the task, to name but a few non-limiting examples.

According to an example embodiment of the first exemplary aspect of the present invention, the plausibility information represents at least one likelihood value, wherein the likelihood value is determined based on a comparison that each information comprised by the set of information complies with the one or more pre-defined or determined according to pre-defined rules requirements.

For instance, for each information comprised by the set of information, e.g. a comparison with the one or more rules is performed. For instance, based on the classification information, it may be known that an information comprised by the set of information is e.g. a restaurant receipt. The location of the restaurant may for instance be determined. Then, this location may be checked with e.g. a travel route information. In case the location of the restaurant relatively matches with the travel route information, a likelihood value may for instance be determined e.g. based on the distance of the location of the restaurant outside of the travel route represented by the travel route information.

The same procedure may for instance be performed for an amount that has been spent according to e.g. a restaurant receipt. It may for instance be checked whether or not the amount is within certain limits (e.g. threshold). Additionally or alternatively, it may for instance be checked whether or not the amount relatively matches one or more amounts spent by other users, e.g. which have been travelled to the same area, to name but a few non-limiting examples. Then, a likelihood value may for instance be determined e.g. based on the deviation of the amount according to the e.g. restaurant receipt to e.g. pre-defined threshold values (which may be set by the company employing the user).

The likelihood value may for instance be a cumulated likelihood value, wherein a plurality of determined likelihood values for each information of the set of information is used for determining the cumulated likelihood value.

According to an example embodiment of the first exemplary aspect of the present invention, the plausibility information and/or the classification information is determined by a first artificial neural network and/or by a second artificial neural network.

The first and/or second artificial neural network may for instance be trained by one or more training cases. Further, the first and/or second artificial neural network may for instance be enhanced by every run of the first and/or second artificial neural network, e.g. a run of determining the classification information and/or a run of determining the plausibility information.

According to an example embodiment of all aspects of the present invention, the first and/or second artificial neural network are trained by one or more exemplary sets of information, in particular by one or more sets of information that are determined to be plausible according to the determined plausibility information.

According to an example embodiment of all aspects of the present invention, the determining of the classification information further comprises:
- checking whether or not each information comprised by the set of information is complete, wherein the checking is performed based on a pre-defined minimum requirement information indicative of one or more requirements and/or attributes that need to be comprised by each information comprised by the set of information;
- associating a denied flag to an information of the set of information, which is incomplete;
- transmitting the one or more information, which are incomplete, back to the source, and
- receiving a corrected information of the incomplete information, wherein at least the step of the checking is performed with the corrected information.

The steps of checking, associating, transmitting and receiving may for instance be performed for one information comprised by the set of information only, or may for instance be performed several times for each information comprised by the set of information which is denied (e.g. not meeting certain pre-defined minimum requirements according to the minimum requirements information) until each information comprised by the set of information that can be used to determine the plausibility information is determined to be not denied (e.g. meeting the certain pre-defined criteria). In this way, e.g. a user has an opportunity to correct information of the set of information, e.g. via a two-way communication.

The flag may for instance be a binary value, e.g. 0 or 1, added to the (incomplete) information comprised by the set of information, which is denied. The flag bit may for instance be added to be the last bit of said information. In this way, an apparatus (e.g. electronic device) receiving the incomplete information may easily detect that the information was denied thus not passing the verification during the determining of the plausibility information, as described above.

According to an example embodiment of the second exemplary aspect of the present invention, the first apparatus is a server.

According to an example embodiment of the second exemplary aspect of the present invention, the gathering of the one or more information may for instance be a gathering of the one or more information, e.g. with one or more sensors, e.g. of the at least one second apparatus (e.g. the electronic device).

The gathering of the one or more information may for instance be a taking of a picture of a record (e.g. receipt), and/or a measuring of data with the one or more sensors (e.g. accelerometer, GPS receiver, to name but a few non-limiting examples), and/or further information derived by the one or more sensors. For instance, a picture may be gathered by a camera sensor, a travel route information may be gathered by a GPS receiver, to name but a few non-limiting examples.

Then, the one or more information are used to generate a set of information. Further, the set of information may for instance comprise additional information, e.g. an identifier of a user which has performed a task, an account information or the like to name but a few non-limiting examples. The set of information may for instance be generated based on such information as well.

The generated set of information is provided, e.g. by outputting the set of information. The set of information is output, e.g. to the first apparatus (e.g. server) or to another apparatus that transfers (e.g. relays) the set of information to the first apparatus.

Optionally, the method further comprises checking whether or not all information are gathered prior to the generating of the set of information. For instance, user input may be requested to obtain whether or not all information which should be comprised by the one or more information are gathered.

According to an example embodiment of the second exemplary aspect of the present invention, the method further comprising:
- receiving reimbursement information indicative of an amount to be physically reimbursed based on the reimbursement information.

For instance, in case the physical reimbursement is completed (e.g. an amount of money was successfully transferred to a (bank) account of the user), the reimbursement information indicative of the amount which was initiated to be physical reimbursed to the user may for instance be transmitted to the second apparatus (e.g. electronic device of the user). In this way, the user may for instance be informed that one or more expenses delivered by him in advance are successfully transferred back to him.

According to an example embodiment of the second exemplary aspect of the present invention, at least a part of each information comprised by the set of information is gathered with one or more sensors.

The one or more sensors may for instance be comprised or connectable to the second apparatus (e.g. the electronic device of the user).

The one or more sensors may for instance comprise at least one of e.g. a camera sensor, an accelerometer, a gyroscope, a GPS receiver, or a combination thereof. Further details with respect to the one or more sensors, e.g. comprised by or connectable to the second apparatus (e.g. the electronic device of the user) have been described above and/or are described below.

According to an example embodiment of all aspects of the present invention, the generating of the set of information comprises determining one or more data matrices, wherein the one or more data matrices are comprised by each information of the one or more information of the generated set of information.

The one or more data matrices may for instance be determined, e.g. based on an OCR, sensor data, manual input (e.g. by the user), or the like to name but a few non-limiting examples. The one or more data matrices may for instance comprise e.g. separable information comprised e.g. by a record (e.g. receipt), which may have been digitalized to represent the information comprised by the set of information. For instance, in case the record is a restaurant receipt, the one or more data matrices may for instance comprise the physical address of the restaurant, the items consumed, the price the consumed items have cost, or the like to name but a few non-limiting examples. The one or more data matrices may for instance be used as an input of the first and/or second artificial neural network (described above). Further, the one or more data matrices may be used as an input of an accounting application, e.g. used by the company of the user.

According to an example embodiment of the second exemplary aspect of the present invention, the method further comprising:
- receiving one or more information comprised by the generated set of information, wherein the received one or more information are considered to be incomplete;
- obtaining user input for correcting the one or more information considered to be incomplete, wherein said one or more information considered to be incomplete are corrected based on the obtained user input; and
- providing the corrected one or more information.

The received information may for instance have been denied (also referred to as considered to be incomplete) e.g. by the first apparatus (e.g. server), which has received the provided generated set of information, and the respective information of the set of information and which has the provided information comprised by the set of information considered to be e.g. not plausible (e.g. based on the determined plausibility information).

The steps of receiving one or more information and obtaining user input may for instance be performed for one incomplete information only, or may for instance be performed several times for each information of the set of information which is incomplete until each information of the one or more information can be used to determine the plausibility information, e.g. by the first apparatus (e.g. server).

According to an example embodiment of the second exemplary aspect of the present invention, the second apparatus is an electronic device.

The electronic device may for instance be portable (e.g. weigh less than 5, 4, 3, 2, or 1 kg). The electronic device may for instance be comprise or be connectable to a display for displaying information (e.g. at least one information of the set of information) to the user. The electronic device may for instance comprise or be connectable to means for outputting sound, e.g. in the form of spoken commands or information. The electronic device may for instance comprise or be connectable to one or more sensors, e.g. for determining the devices position such as a Global Navigation Satellite System (GNSS) receiver, e.g. in the form of a Global Positioning System (GPS receiver). Further, the one or more sensors comprised by or connectable to the electronic device may for instance be for determining a time and/or date, an acceleration information indicative of a movement of the electronic device (e.g. by one or more accelerometers or gyroscopes), a compass information indicative of a direction (e.g. by one or more compass sensors), a barometric information indicative of a (e.g. relative) altitude of the electronic device (e.g. by one or more pressure sensors), a picture information indicative of a picture taken by the electronic device (e.g. by one or more cameras), a sound information indicative of a sound recorded by the electronic device (e.g. by one or more microphones), to name but a few non-limiting examples.

The features and example embodiments of the invention described above may equally pertain to the different aspects according to the present invention.

It is to be understood that the presentation of the invention in this section is merely byway of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2a: a flowchart showing an example embodiment of a method according to the first exemplary aspect of the present invention, for instance performed by server 110 of Fig. 1;
- Fig. 2b: a flowchart showing an example embodiment of a method according to the second exemplary aspect of the present invention, for instance performed by electronic device 130a-c of Fig. 1;
- Fig. 3: a schematic flowchart showing an example of a travel expense reimbursement process, as performed by a method according to the first and second exemplary aspect of the present invention;
- Fig. 4: a schematic block diagram of a first apparatus according to an exemplary aspect of the present invention;
- Fig. 5: a schematic block diagram of a second apparatus according to an exemplary aspect of the present invention; and
- Fig. 6: a schematic block diagram of an architecture as used in an example embodiment of the present invention.

### DETAILED DESCRIPTION

The following description serves to deepen the understanding of the present invention and shall be understood to complement and be read together with the description as provided in the above summary section of this specification.

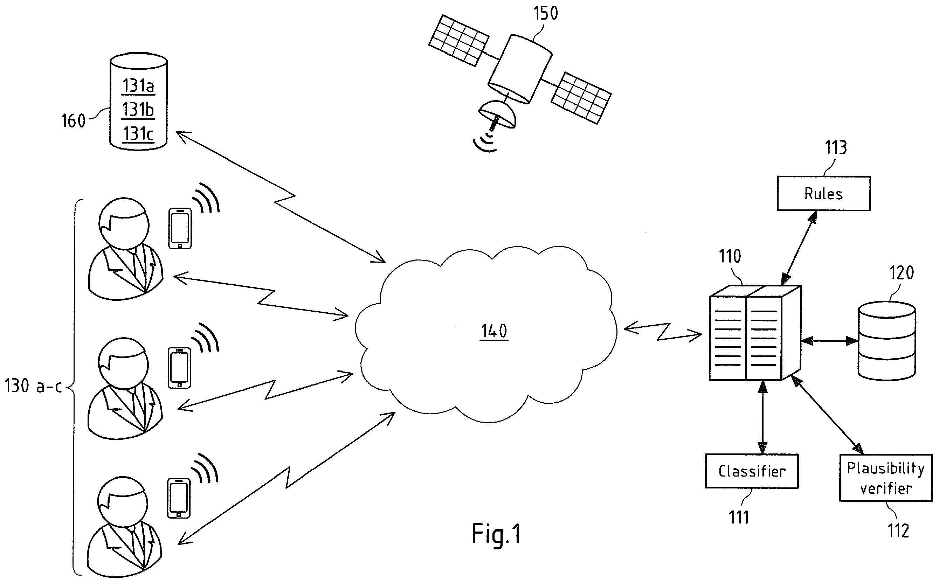

Fig. 1 is a schematic high-level block diagram of a system 100 according to an exemplary aspect of the present invention. System 100 comprises a server 110, which may alternatively be embodied as a server cloud (e.g. a plurality of servers connected, e.g. via the internet and providing services at least partially jointly), a database 120 connected to or comprised by the server 110, one or more electronic devices 130a-c, of which three electronic devices are shown in Fig. 1, a communication network 140 (e.g. the internet), positioning service 150, and another database 160, which maybe connected to the server 110 and/or the electronic device 130 via the internet, and which may comprise one or more user accounts 131a-c, wherein such a user account 131a-c is associated with one or more users of the electronic devices 130a-c.

According to embodiments of the present invention, electronic device 130a-c gathers one or more information indicative of one or more records. The one or more information are associated with a task (e.g. a business travel) performed by the user of the electronic device 130a-c. Based on the one or more information, a set of information is generated, which is then provided, e.g. to the server 110 via the communication network 140.

The provided set of information may then be obtained, e.g. by the server 110. The server 110 may then determine a classification information, e.g. by the classifier 111, which may be comprised by the server as a structural and/or functional unit. The classification information is indicative of a record type of each information of the obtained set of information.

Further, a plausibility information for each information of the one or more information comprised by the set of information is determined based on the one or more information comprised by the set of information and the determined classification information, e.g. by the plausibility verifier 112, which may be comprised by the server as a structural and/or functional unit. The plausibility information is indicative of a verification of at least one of the one or more information comprised by the set of information complying with at least one pre-defined requirement. Thus, the obtained set of information is checked, e.g. whether or not the expenses delivered in advance by the user of the electronic device 130a-c with respect to the task (e.g. the business travel) comply with the pre-defined requirements (e.g. the rules 113, e.g. accessible by the server 110).

In case the plausibility information is indicative of such a compliance, a physical reimbursement is initiated, e.g. the expenses delivered in advance by the user of the electronic device 130a-c may be transferred back to an account (e.g. bank account) associated with the user, which may for instance be comprised by the user account 131a-c.

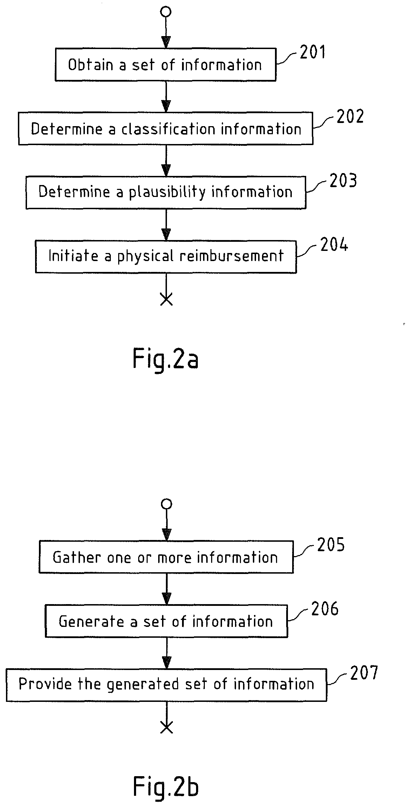

Fig. 2a is a flowchart showing an example embodiment of a method according to the first exemplary aspect of the present invention, for instance performed by server 110 of Fig. 1.

In a first step 201, a set of information is obtained (e.g. received), e.g. from the electronic device 130a-c of Fig. 1 or from another entity, e.g. that relays the set of information from the electronic device to the server 110 of Fig. 1.

In a second step 202, a classification information is determined. The classification information is indicative of a record type of each information of the set of information and is determined based on the obtained set of information.

In a third step 203, a plausibility information is determined for each information of the one or more information comprised by the set of information based on the one or more information comprised by the set of information and the determined classification information. Further, the plausibility information is indicative of a verification of at least one of the one or more information comprised by the set of information complying with at least one pre-defined requirement.

In a fourth step 204, a physical reimbursement is initiated, e.g. so that expenses delivered in advance and e.g. documented by the obtained set of information are transferred back to an account (e.g. bank account) of the user.

Fig. 2b is a flowchart showing an example embodiment of a method according to the second exemplary aspect of the present invention, for instance performed by electronic device 130a-c of Fig. 1.

In a first step 205, one or more information are gathered. Each information of the one or more information is indicative of a record, and wherein the one or more information are associated with a task performed by a user. The one or more information are gathered, e.g. by one or more sensors, e.g. comprised by or connectable to the electronic device.

In a second step 206, a set of information is generated based at least partially on the gathered one or more information.

In a third step 207, the generated set of information is provided (e.g. output), e.g. to the server 110, or to another entity, e.g. that transfers (e.g. relays) the set of information to the server 110.

The flowchart 200a and/or 200b may for instance comprise one or more further features described above, for instance a check whether or not one or more information comprised by the set of information comply with e.g. pre-defined rules, and depending on the outcome, a correction (e.g. via a dialog between an electronic device of the user and a server) of the information not complying with the pre-defined rules.

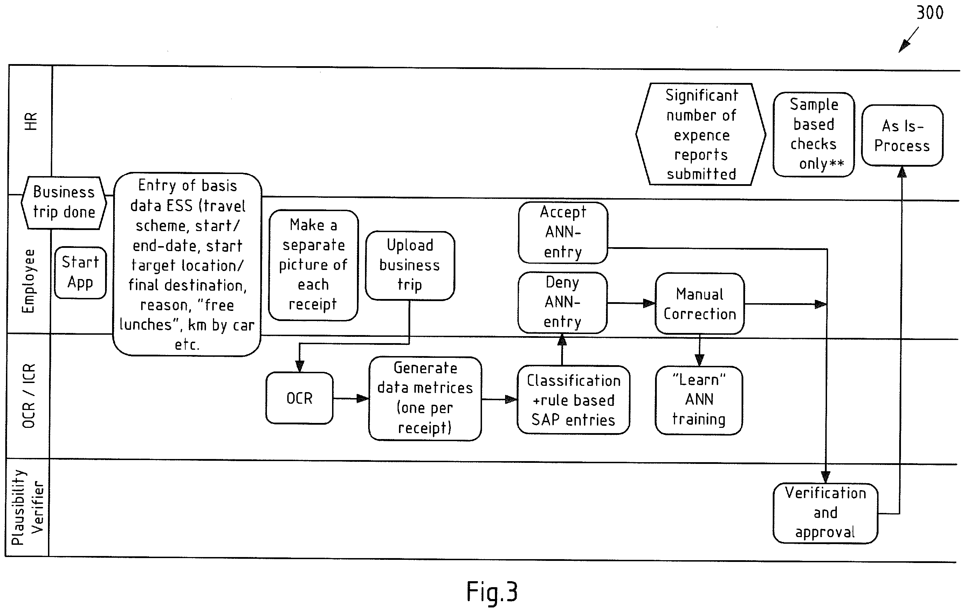

Fig. 3 is a schematic flowchart showing an example of a travel expense reimbursement process, as performed by a method according to the first and second exemplary aspect of the present invention. The flowchart 300 may for instance be performed and/or controlled by a system 100 of Fig. 1.

An employee (as a user) may for instance have completed a task (e.g. a business trip), as is indicated by the box in the row "employee". The employee may then start an application of his electronic device (e.g. electronic device 130a-c of Fig. 1). For instance, using one or more sensors of the electronic device, the employee may gather one or more information, e.g. which may be used as an entry of basis data, which may comprise information associated with the task "business travel", e.g. travel scheme, start/end-date, start/target location, final destination, reason, "free lunches", km by car, or the like to name but a few non-limiting examples (e.g. gathered by a GPS receiver as a sensor).

Further, the user may gather further information, e.g. via one or more sensors of his electronic device, e.g. taking separate pictures of every receipt associated with the task, at hand the business travel. Then, the application generates a set of information based on the gathered one or more information, and provides the set of information, e.g. by uploading the set of information associated with the business travel/trip.

The set of information is obtained, and e.g. an OCR process is performed to determine data matrices by generating a respective data matrix for every information (e.g. receipt; e.g. one per receipt) comprised by the set of information. An artificial neural network (ANN) may then determine at least one classification information, e.g. based on the data matrices which may be used e.g. for an accounting application handling the business travel of the employee. This may for instance be performed by an ICR (Intelligent Character Recognition), which may for instance perform an OCR process. Alternatively or additionally, the ICR may use an ANN to perform the (e.g. optical) character recognition. Thus, the ICR may for instance further use performed e.g. OCRs to enhance the performance of the ANN by using performed OCRs as an input to learn the ANN.

Then, a plausibility information is determined, at hand entries determined by a plausibility verifier (e.g. plausibility verifier 112 of Fig. 1). The determined plausibility information represents either if the information provided by the user are denied (see Deny ANN-entry block) or accepted (see Accept ANN-entry block). In case a determined classification information and an entry determined for the accounting application is denied, the user may perform correction, e.g. manual correction by entering further or correction information, e.g. via his electronic device. The correction e.g. by the user may for instance further be used as a training case for enhancing the ANN (e.g. by learning based at least partially on the training case). Subsequently, a further plausibility information may be determined. Alternative, the plausibility information may for instance be determined by the ANN that may be used by the ICR or another ANN. The determining of the plausibility information at hand comprises a verification and approval of the obtained set of information associated with the business travel performed by the user, which is performed by the plausibility verifier. Then, a physical reimbursement of expenses delivered in advance by the user during the business travel can be initiated by the plausibility verifier, in case the information provided by the user are successfully verified and approved.

Human resources (HR) may only be used for sample based checks, or for a significant number of expense reports, which are submitted by the user as a set of information and which do not comply with the rules at all. In this case, HR may be required to handle the case at least at the very first time the case occurs, so that after a handling of the HR, such cases in which a significant number of expense occurs which is associated with a task performed by the user, may for instance further be used as a training case for enhancing the ANN (e.g. by learning based at least partially on the training case). Further, in case the information provided by the user are not successfully verified and approved by the plausibility verifier (e.g. the plausibility verifier determines one or more information comprised by the set of information violating the rules (e.g. according to rules 113 of Fig. 1), and/or the user has overwritten respectively changed one or more entries of the determined (e.g. generated) data metrices), the information may be transmitted to HR to be checked manually. The result of the checking by the HR may be further used for enhancing the ANN.

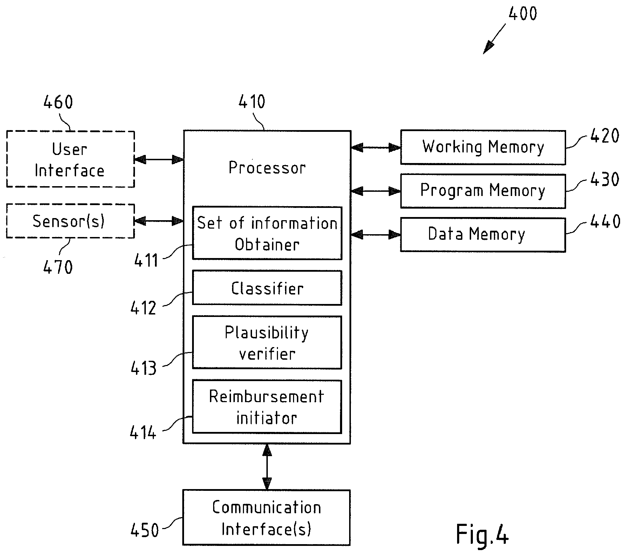

Fig. 4 is a schematic block diagram of an apparatus 400 according to an exemplary aspect of the present invention, which may for instance represent the server 110 of Fig. 1.

Apparatus 400 comprises a processor 410, working memory 420, program memory 430, data memory 440, communication interface(s) 450, an optional user interface 460 and an optional sensor(s) 470.

Apparatus 400 may for instance be configured to perform and/or control or comprise respective means (at least one of 410 to 470) for performing and/or controlling the method according to the first exemplary aspect. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to exemplary aspects of the invention.

Processor 410 may for instance comprise a set of information obtainer 411 as a functional and/or structural unit. Set of information obtainer 411 may for instance be configured to obtain a set of information (see step 201 of Fig. 2a). Processor 410 may for instance comprise a classifier 412 as a functional and/or structural unit. Classifier 412 may for instance be configured to determine a classification information (see step 202 of Fig. 2a). Processor 410 may for instance comprise a plausibility verifier 413 as a functional and/or structural unit. Plausibility verifier 413 may for instance be configured to determine a plausibility information (see step 203 of Fig. 2a). Processor 410 may for instance comprise a reimbursement initiator 414 as a functional and/or structural unit. Reimbursement initiator 414 may for instance be configured to initiate a physical reimbursement (see step 204 of Fig. 2a). Processor 410 may for instance further control the memories 420 to 440, the communication interface(s) 450, the optional user interface 460 and the optional sensor(s) 470.

Processor 410 may for instance execute computer program code stored in program memory 430, which may for instance represent a computer readable storage medium comprising program code that, when executed by processor 410, causes the processor 410 to perform the method according to the first exemplary aspect.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store map data 341. Map data 341 may for instance represent an altitude map. Map data 341 may comprise one or more data elements, e.g. data elements 341a and 341b. Each data element stored in data memory 440 may for instance represent at least one map region. Further, an absolute altitude information may be associated with each of the data elements. Further, each at least one map region of a data element may border to another at least one map region of a further data element.

Communication interface(s) 450 enable apparatus 400 to communicate with other entities, e.g. with server 110 of Fig. 1. The communication interface(s) 450 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 400 to communicate with other entities, for instance with server 110 of Fig. 1.

User interface 460 is optional and may comprise a display for displaying information to a user and/or an input device (e.g. a keyboard, keypad, touchpad, mouse, etc.) for receiving information from a user.

Sensor(s) 470 are optional and may for instance comprise a barometric sensor, e.g. to gather pressure information.

Some or all of the components of the apparatus 400 may for instance be connected via a bus. Some or all of the components of the apparatus 400 may for instance be combined into one or more modules.

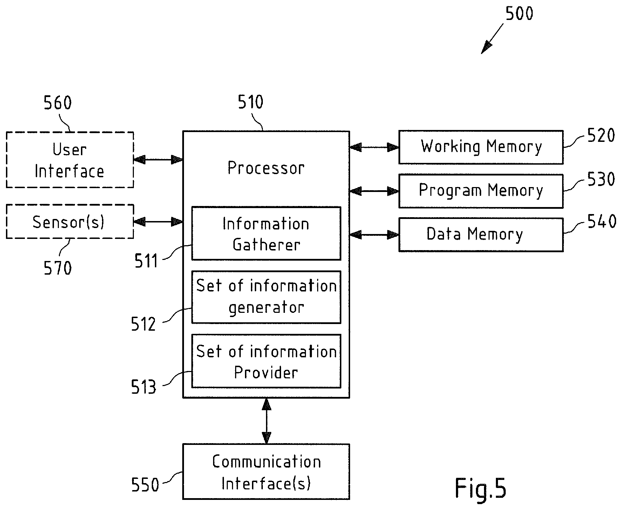

Fig. 5 is a schematic block diagram of an apparatus 500 according to an exemplary aspect of the present invention, which may for instance represent the electronic device 130a-c of Fig. 1.

Apparatus 500 comprises a processor 510, working memory 520, program memory 530, data memory 540, communication interface(s) 550, an optional user interface 560 and an optional sensor(s) 570.

Apparatus 500 may for instance be configured to perform and/or control or comprise respective means (at least one of 510 to 570) for performing and/or controlling the method according to the first exemplary aspect. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to exemplary aspects of the invention.

Processor 510 may for instance comprise an information gatherer 511 as a functional and/or structural unit. Information gatherer 511 may for instance be configured to gather one or more information (see step 205 of Fig. 2b). Processor 510 may for instance comprise a set of information generator 512 as a functional and/or structural unit. Set of information generator 512 may for instance be configured to generate a set of information (see step 206 of Fig. 2b). Processor 510 may for instance comprise a set of information provider 513 as a functional and/or structural unit. Set of information provider 513 may for instance be configured to provide a set of information (see step 207 of Fig. 2b). Processor 510 may for instance further control the memories 520 to 540, the communication interface(s) 550, the optional user interface 560 and the optional sensor(s) 570.

Processor 510 may for instance execute computer program code stored in program memory 530, which may for instance represent a computer readable storage medium comprising program code that, when executed by processor 510, causes the processor 510 to perform the method according to the first exemplary aspect.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store map data 341. Map data 341 may for instance represent an altitude map. Map data 341 may comprise one or more data elements, e.g. data elements 341a and 341b. Each data element stored in data memory 540 may for instance represent at least one map region. Further, an absolute altitude information may be associated with each of the data elements. Further, each at least one map region of a data element may border to another at least one map region of a further data element.

Communication interface(s) 550 enable apparatus 500 to communicate with other entities, e.g. with server 110 of Fig. 1. The communication interface(s) 550 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 500 to communicate with other entities, for instance with server 110 of Fig. 1.

User interface 560 is optional and may comprise a display for displaying information to a user and/or an input device (e.g. a keyboard, keypad, touchpad, mouse, etc.) for receiving information from a user.

Sensor(s) 570 are optional and may for instance comprise a barometric sensor, e.g. to gather pressure information.

Some or all of the components of the apparatus 500 may for instance be connected via a bus. Some or all of the components of the apparatus 500 may for instance be combined into one or more modules.

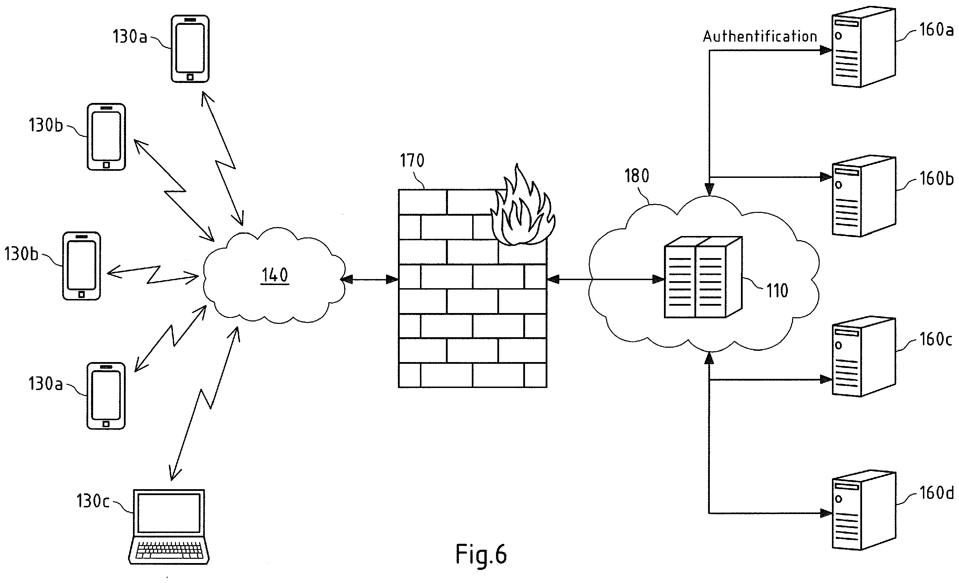

Fig. 6 is a schematic block diagram of an architecture as used in an example embodiment of the present invention.

The shown architecture of Fig. 6 may for instance be used by an example embodiment of a method according to the first and/or second exemplary embodiment of the present invention. The architecture of Fig. 6 may for instance represent a server/client architecture, e.g. employing an example embodiment of a method according to the first and/or second exemplary embodiment of the present invention.

The architecture shown in Fig. 6 comprises a plurality of mobile devices 130a-c (e.g. to the electronic device 130a-c of Fig. 1), a server 110 (e.g. server 110 of Fig. 1), a communication network 140 (e.g. communication network 140 of Fig. 1, for instance the internet), a plurality of servers 160a-d (e.g. an active directory server 160a, an accounting server 160b, an archive server 160c, and a mail server 160d), a firewall 170, and a DMZ 180 (Demilitarized Zone), wherein the server 110 may for instance be comprised by the DMZ 180.

The plurality of mobile devices 130a-c may for instance belong to a plurality of users, wherein each user of the plurality of users may for instance request to get a physical reimbursement, e.g. of travel expenses delivered in advance.

Authentication (e.g. of a user) may for instance be performed between the mobile device 130a-c of the user, and the server 160a, e.g. the active directory server, wherein the active directory server 160a may for instance comprise information needed for the authentification. The server 160a may for instance check one or more credentials of the user, so that only an authorized user may request e.g. the reimbursement e.g. of travel expenses.

After the user is authenticated, e.g. travel data representing information with respect to a business travel respectively trip the user has made, may be obtained, wherein the travel data may be represented by one or more information comprised by a set of information. Further, the one or more information may for instance be gathered by the mobile device 130a-c of the user, e.g. via one or more sensors (e.g. GPS) of the mobile device 130a-c. Further, one or more information represented by e.g. one or more records, e.g. receipts of travel expenses, wherein the travel expenses may for instance be provided in advance by the user during the business travel respectively trip of the user. Such one or more information may be obtained by the mobile device 130a-c. These obtained information (e.g. receipts of travel expenses) may for instance be gathered by one or more camera sensors comprised by or connectable to the mobile device 130a-c. Then, all the information obtained may for instance be used to generate a set of information, which is provided by the user respectively the mobile device 130a-c to the server 110, e.g. via the communication network 140.

To enhance security, the DMZ 180 may be employed and may comprise the server 110 in the architecture of Fig. 6, e.g. to protect the infrastructure of the company (employer) of the user (employee) from unauthorized access of third parties (e.g. fraudulent usage).

The server 110 may be comprised by the DMZ 180, and may optionally further be protected by the firewall 170. The server 110 may for instance be an ICR/OCR server and/or may be adapted to perform and/or control ICR/OCR processes, e.g. based on the provided set of information.

An ICR- and/or an OCR-process may for instance be performed by the server 110 respectively an ANN comprised by the server 110, e.g. to generate one or more data metrices (e.g. one per receipt) based on the provided set of information. For instance, a classification information may be determined and one or more rule based entries may be determined, e.g. for the accounting server 160b. Optionally, the generated entries may for instance be provided back to the mobile device 130a-c so that the user may accept or deny the (automatically) generated entries (e.g. by the ANN of the server 110). In case the user denied one or more entries, the user may e.g. correct manually one or more information of those entries, e.g. by inputting further information into the mobile device 130a-c. In case the generated entries are accepted by the user, the information may be used to determine a plausibility information, e.g. by a plausibility verifier (e.g. plausibility verifier 112 of Fig. 1), which may for instance be comprised by the server 110.

Then, the verified and approved information of the plausibility verifier may be provided to the accounting server 160b, e.g. as travel data. By providing the verified and approved information to the accounting server 160b, the physical reimbursement of expenses delivered in advance by the user can be initiated. Further, the user respectively the mobile device 130a-c and/or the server 110 may for instance request a status and statement of cost transmission to get e.g. the status or how much expenses the user can expect to be physically reimbursed with. Such status and statement of cost transmission may for instance be provided by the mail server 160d, wherein further requests to get such status and statement of cost transmission may for instance be received by the mail server 160d as well, which may for instance relay the request to the server 110. Based on the request, e.g. the requested status and statement of cost transmission may be transmitted back.

Further, the server 110 may perform and/or control one or more ANNs, and optionally perform training of the one or more ANNs. The training may for instance be performed and/or controlled based at least partially on one or more information comprised by e.g. the archive server 160c. For instance, generated data metrices, which may be accepted by the user and which may represent already physically reimbursed travel expenses e.g. of further business travels respectively trips, may for instance be additionally stored in the archive server 160c.

The following embodiments shall also be considered to be disclosed:

### Embodiment 1:

A first apparatus comprising at least one processor and at least one memory including computer program code, the at least one memory and the computer program code configured to, with the at least one processor, cause the first apparatus to at least perform:
- obtaining a set of information comprising one or more information, wherein each information of the set of information is indicative of a record, wherein the set of information is associated with a task performed by a user;
- determining a classification information indicative of a record type of each information of the set of information based on the obtained set of information;
- determining a plausibility information for each information of the one or more information comprised by the set of information based on the one or more information comprised by the set of information and the determined classification information, wherein the plausibility information is indicative of a verification of at least one of the one or more information comprised by the set of information complying with at least one pre-defined requirement; and
- initiating a physical reimbursement based at least partially on the obtained set of information and on the determined plausibility information.

### Embodiment 2:

The first apparatus according to embodiment 1, wherein each information of the one or more information comprised by the set of information is indicative of one or more of the following types i) to iv) of information:
i) travel route information;
ii) record information;
iii) one or more times and/or dates associated with each information of the set of information; and
iv) amount information.

### Embodiment 3:

The first apparatus according to embodiment 2, wherein each of the types i) to iv) of information comprises at least a part of information gathered by one or more sensors.

### Embodiment 4:

The first apparatus according to any of the preceding embodiments, wherein the initiating of the physical reimbursement comprises determining a reimbursement information indicative of an amount to be physically reimbursed, and transferring the amount represented by the reimbursement information to an account associated with the user.

### Embodiment 5:

The first apparatus according to any of the preceding embodiments, wherein the determining of the plausibility information comprises at least one comparison of each information comprised by the set of information with one or more pre-defined or determined according to pre-defined rules requirements.

### Embodiment 6:

The first apparatus according to embodiment 5, wherein the plausibility information represents at least one likelihood value, wherein the likelihood value is determined based on a comparison that each information comprised by the set of information complies with the one or more pre-defined or determined according to pre-defined rules requirements.

### Embodiment 7:

The first apparatus according to any of the preceding embodiments, wherein the plausibility information and/or the classification information is determined by a first artificial neural network and/or by a second artificial neural network.

### Embodiment 8:

The first apparatus according to any of the preceding embodiments, the at least one memory and the computer program code configured to, with the at least one processor, cause the apparatus further to perform when the determining of the classification information further comprises:
- checking whether or not each information comprised by the set of information is complete, wherein the checking is performed based on a pre-defined minimum requirement information indicative of one or more requirements and/or attributes that need to be comprised by each information comprised by the set of information;
- associating a denied flag to an information of the set of information, which is incomplete;
- transmitting the one or more information, which are incomplete, back to the source, and
- receiving a corrected information of the incomplete information, wherein at least the step of the checking is performed with the corrected information.

### Embodiment 9:

A second apparatus comprising at least one processor and at least one memory including computer program code, the at least one memory and the computer program code configured to, with the at least one processor, cause the second apparatus to at least perform:
- gathering one or more information, wherein each information of the one or more information is indicative of a record, wherein the one or more information are associated with a task performed by a user;
- generating a set of information based at least partially on the gathered one or more information; and
- providing the generated set of information.

### Embodiment 10:

The second apparatus according to embodiment 9, the at least one memory and the computer program code configured to, with the at least one processor, cause the apparatus further to perform:
- receiving reimbursement information indicative of an amount to be physically reimbursed based on the reimbursement information.

### Embodiment 11:

The second apparatus according to embodiment 9 or embodiment 10, wherein at least a part of each information comprised by the set of information is gathered with one or more sensors.

### Embodiment 12:

The second apparatus according to any of the embodiments 9 to 11, wherein the generating of the set of information comprises determining one or more data matrices, wherein the one or more data matrices are comprised by each information of the one or more information of the generated set of information.

### Embodiment 13:

The second apparatus according to any of the embodiments 9 to 12, the at least one memory and the computer program code configured to, with the at least one processor, cause the second apparatus further to perform:
- receiving one or more information comprised by the generated set of information, wherein the received one or more information are considered to be incomplete;
- obtaining user input for correcting the one or more information considered to be incomplete, wherein said one or more information considered to be incomplete are corrected based on the obtained user input; and
- providing the corrected one or more information.

### Embodiment 14:

A first apparatus configured to perform and/or control or comprising respective means for performing and/or controlling the method of any of the embodiments 1 to 8.

### Embodiment 15:

A second apparatus configured to perform and/or control or comprising respective means for performing and/or controlling the method of any of the embodiments 9 to 13.

### Embodiment 16:

A first apparatus comprising at least one processor and at least one memory including computer program code, the at least one memory and the computer program code configured to, with the at least one processor, cause a first apparatus at least to perform and/or control the method of any of the embodiments 1 to 8.

### Embodiment 17:

A second apparatus comprising at least one processor and at least one memory including computer program code, the at least one memory and the computer program code configured to, with the at least one processor, cause a second apparatus at least to perform and/or control the method of any of the embodiments 9 to 13.

### Embodiment 18:

A first tangible computer-readable medium storing computer program code, the computer program code when executed by a processor causing a first apparatus to perform and/or control:
- obtaining a set of information comprising one or more information, wherein each information of the set of information is indicative of a record, wherein the set of information is associated with a task performed by a user;
- determining a classification information indicative of a record type of each information of the set of information based on the obtained set of information;
- determining a plausibility information for each information of the one or more information comprised by the set of information based on the one or more information comprised by the set of information and the determined classification information, wherein the plausibility information is indicative of a verification of at least one of the one or more information comprised by the set of information complying with at least one pre-defined requirement; and
- initiating a physical reimbursement based at least partially on the obtained set of information and on the determined plausibility information.

### Embodiment 19:

A second tangible computer-readable medium storing computer program code, the computer program code when executed by a processor causing a second apparatus to perform and/or control:
- gathering one or more information, wherein each information of the one or more information is indicative of a record, wherein the one or more information are associated with a task performed by a user;
- generating a set of information based at least partially on the gathered one or more information; and
- providing the generated set of information.

The following embodiment shall also be considered to be disclosed:
Receipts of business travels shall be digitized, and shall be checked for validity and plausibility automatically.

Receipts may be hotel receipts, dinner receipts, taxi, gas station to name but a few non-limiting examples

Receipts are digitized by taking a picture of these receipts and then perform an OCR process of the image.

To classify the receipts, an artificial neural network may be used which may be trained prior to performing the classification of the actual travel receipts. The artificial neural network may for instance perform a pattern recognition (e.g. date, location, amount, type of product or service, etc.)

According to the prior art, digitized (e.g. scanned) receipts are sent to a human resource, wherein the human checks whether the receipts are accepted and the amount of money, which an employee wants to receive back, is checked clear for transferring it back to the employee.

Based on another artificial neural network, a checking framework can be realized, which checks receipts of business travels for plausibility and validity (e.g. time; location; date; order of time, place, dates, etc.; comparing claimed amount of receipt to other known receipts of same time, date, place, hotel, etc.), e.g. based on conditions defined by the employing firm.

Since many different types of receipts may be needed to be checked, which may not be trained, a probability may be the result of the artificial neural network. This may e.g. be checked against a threshold in order to decide whether or not the accounting for the business travel is checked clear or not.

Further iterations of the invention may for instance comprise the app performed by a smartphone to automatically gather e.g. time, date, starting position, finishing position of the business travel. Nowadays, these parameters need to be inputted by the employee. The app may for instance gather these all by itself and automatically.

A main difference to state of the art is that human resources are not needed, thus travel expense accounting can be performed much faster, reliable, with less resources needed. This may save a significant amount of money.

Such a checking framework may for instance be applied to other business areas as well, e.g. warehouse accounting, checking of goods delivered to a warehouse or leaving the warehouse, etc.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, performed and/or controlled by at least one first apparatus, comprising:
- obtaining a set of information comprising one or more information, wherein each information of the set of information is indicative of a record, wherein the set of information is associated with a task performed by a user;
- determining a classification information indicative of a record type of each information of the set of information based on the obtained set of information;
- determining a plausibility information for each information of the one or more information comprised by the set of information based on the one or more information comprised by the set of information and the determined classification information, wherein the plausibility information is indicative of a verification of at least one of the one or more information comprised by the set of information complying with at least one pre-defined requirement; and
- initiating a physical reimbursement based at least partially on the obtained set of information and on the determined plausibility information.

2. The method according claim 1, wherein each information of the one or more information comprised by the set of information is indicative of one or more of the following types i) to iv) of information:
i) travel route information;
ii) record information;
iii) one or more times and/or dates associated with each information of the set of information; and
iv) amount information.

3. The method according to claim 2, wherein each of the types i) to iv) of information comprises at least a part of information gathered by one or more sensors.

4. The method according to any of the preceding claims, wherein the initiating of the physical reimbursement comprises determining a reimbursement information indicative of an amount to be physically reimbursed, and transferring the amount represented by the reimbursement information to an account associated with the user.

5. The method according to any of the preceding claims, wherein the determining of the plausibility information comprises at least one comparison of each information comprised by the set of information with one or more pre-defined or determined according to pre-defined rules requirements.

6. The method according to claim 5, wherein the plausibility information represents at least one likelihood value, wherein the likelihood value is determined based on a comparison that each information comprised by the set of information complies with the one or more pre-defined or determined according to pre-defined rules requirements.

7. The method according to any of the preceding claims, wherein the plausibility information and/or the classification information is determined by a first artificial neural network and/or by a second artificial neural network.

8. The method according to any of the preceding claims, wherein the determining of the classification information further comprises:
- checking whether or not each information comprised by the set of information is complete, wherein the checking is performed based on a pre-defined minimum requirement information indicative of one or more requirements and/or attributes that need to be comprised by each information comprised by the set of information;
- associating a denied flag to an information of the set of information, which is incomplete;
- transmitting the one or more information, which are incomplete, back to the source, and
- receiving a corrected information of the incomplete information, wherein at least the step of the checking is performed with the corrected information.

9. A method, performed and/or controlled by at least one second apparatus, comprising:
- gathering one or more information, wherein each information of the one or more information is indicative of a record, wherein the one or more information are associated with a task performed by a user;
- generating a set of information based at least partially on the gathered one or more information; and
- providing the generated set of information.

10. The method according to claim 9, further comprising:
- receiving reimbursement information indicative of an amount to be physically reimbursed based on the reimbursement information.

11. The method according to claim 9 or claim 10, wherein at least a part of each information comprised by the set of information is gathered with one or more sensors.

12. The method according to any of the claims 9 to 11, wherein the generating of the set of information comprises determining one or more data matrices, wherein the one or more data matrices are comprised by each information of the one or more information of the generated set of information.

13. The method according to any of the claims 9 to 12, further comprising:
- receiving one or more information comprised by the generated set of information, wherein the received one or more information are considered to be incomplete;
- obtaining user input for correcting the one or more information considered to be incomplete, wherein said one or more information considered to be incomplete are corrected based on the obtained user input; and
- providing the corrected one or more information.

14. An apparatus configured to perform and/or control or comprising respective means for performing and/or controlling the method of any of the claims 1 to 13.

15. A computer program, the computer program when executed by a processor causing an apparatus to perform and/or control the method of any of the claims 1 to 13.

16. A system, comprising:
- at least one first apparatus, and
- at least one second apparatus,
which are configured to perform and/or control the method of any of the claims 1 to 13.
